Europäisches Patentamt

(19) **European Patent Office**

Office européen des brevets

(11) Publication number: **0 105 051**
**B1**

## EUROPEAN PATENT SPECIFICATION

(12)

(45) Date of publication of patent specification: **22.03.89**

(51) Int. Cl.⁴: **A 23 L 1/10,** A 23 L 1/20, A 23 K 1/165, A 23 K 1/18

(21) Application number: **82109063.6**

(22) Date of filing: **30.09.82**

(54) Pet food products containing alpha-amylase and process.

(43) Date of publication of application:
**11.04.84 Bulletin 84/15**

(45) Publication of the grant of the patent:
**22.03.89 Bulletin 89/12**

(84) Designated Contracting States:
**AT BE CH DE FR GB IT LI LU NL SE**

(56) References cited:
**BE-A- 754 258
DE-A-2 127 831
DE-A-2 254 924
DE-A-2 726 109
GB-A-1 495 118
US-A-3 202 514**

(73) Proprietor: **THE QUAKER OATS COMPANY**
**617 West Main Street**
**Barrington Illinois 60010 (US)**

(72) Inventor: **Preignitz, Ronald D.**
**1469 Lowe Drive**
**Algonquin Illinois 60102 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates to soft, semi-moist pet food products and more particularly to pet food products of an amylaceous character containing heat stable α-amylase which is added in amounts sufficient to maintain or improve the soft texture after a heat treatment.

While it is well recognized that many features contribute to the taste of a food, it is equally well recognized that an important taste feature of a food including pet foods is its texture, or, the relative softness of the food. A food that feels hard or conversely, extremely soft or mushy may not be acceptable, the desired texture lying generally somewhere in the intermediate range. Foods such as meat or meat substitutes are usually expected to be relatively soft. Some products though initially of a soft texture, such as bread, are known to stale and become hard upon storage. No imagination is needed to realize that with a wide variety of foods and, again, pet foods, texture or, retaining a soft texture, can be a large problem.

Even though it is possible to manufacture a pet food product having initially the desired soft texture, staling and the like are factors encountered on storage which can have an adverse effect on texture.

Because of such hardness and change in texture is inherently undesirable in pet food products, it thus becomes clearly desirable to prevent this change in texture or reduce the texture deterioraton inherent in a stored food.

As disclosed in U.S. Patent No. 3,202,514, procedures are known for achieving a food having a soft texture by addition of such ingredients as homectants. In some cases, a food which is manufactured with a soft texture had such a low amount of texture deterioration that storage is highly feasible for that food without a substantial loss in texture. Even in these cases, there is some loss of texture which can become detrimental of the storage is overly extended. The components generally used to achieve the desired texture are costly and can have a somewhat adverse effect on palatability.

Besides the use of humectants, another way to achieve and maintain a soft texture is through the use of certain emulsifiers which tend to complex with the starch, thereby retarding starch degradation. However emulsifiers only slow down the rate of staling, and do not completely inhibit it.

U.S. Patent No. 2,615,810 discloses the addition an amylase enzyme to bakery products such as breads, to achieve a softening of the bread texture. However, in the baking process, the bread dough is cooked at a sufficiently high temperature for a sufficiently long time to assure inactivation of the enzyme during baking. Thus no texturization of the bread can occur after baking, and the bread also will become hard or stale with time.

Therefore, an object of the subject invention is a pet food product and a process for preparing a soft pet food product having a texture which can be maintained during storage.

The present invention therefore provides a soft, semi-moist pet food product including soft, extrusion cooked particles having 10—60% starch, 22—50% protein and 15—40% moisture, characterized in that said product includes an enzyme in the pet food product consisting essentially of alpha-amylase, wherein the alpha-amylase is in an active condition and wherein the active conditions alpha-amylase is in the pet food product during subsequent storage.

The present invention is also desired to a method of making a soft, semi-moist pet food product including the steps of admixing a dough having at least one amylaceous ingredient, at least one proteinaceous ingredient selected from animal, vegetable or cereal sources, and sufficient water to provide a moisture content in the pet food product in the range 15—40%, and extrusion cooking the dough at a temperature in the range of 75—120°C. Inclusive for a time period in the range 5 seconds to 15 minutes, characterized in that said method comprises adding to the dough as enzyme ingredient consisting essentially of a heat-stable alpha-amylase enzyme, and the extrusion cooking of the dough containing alpha-amylase is at a temperaure and for a time period sufficiently mild that at least some alpha-amylase remains active in the pet food product, and storing the pet food product containing the active alpha-amylase.

With the invention a pet food having improved texture upon storage is provided while avoiding adverse effects on its palatability.

These and other features of this invention will become more evident by the following description and examples of preferred embodiments of the invention.

In accordance with the invention, it has been found that a pet food product containing an amylaceous ingredient, such as cereal grains can maintain or improve its texture by the addition of an effective amount of active α-amylase.

The amount of α-amylase suitable for use in this invention varies depending on the type of pet food product in which it is to be used, and can be easily determined by a person having ordinary skill in the art. Generally speaking, from a trace to about 5000 SKB units of α-amylase is added for each kilogram of starch in the food being made and is present in the food after processing. More preferably, from about 0.25 SKB units to about 2000 SKB units per kilogram of starch in the product is in the food after processing. Even more preferably, about 0.5 SKB units to about 1000 SKB units per kilogram of starch in the product may be added to achieve the appropriate levels in the food product after processing. The reference to SKB units is well known in the art as a definition for amylase activity as set forth in Sanstedt, et. al., *Cereal Chemistry*, Vol. 16, page 712, (1939). A factor to be considered in determining the effective amount of enzyme to be used to achieve a desired texture in a pet food product is the moisture content of the food product. Unless the pet food product contains over fifteen percent moisture, only minimal or no texturizing effect will be noted. Based on current observations, it would appear that appreciable enzymatic activity of the α-amylase occurs only at moisture levels above about fifteen percent.

α-Amylase is well known enzyme, having an IUB number of 3.2.1.1., which defines α-amylase in an internationally accepted manner. It is also known as 1,4-α-D glucan glucanohydrolase. α-Amylase is generally present in all amylaceous materials at low levels and, by previous practices, was generally reduced to a low ineffective concentration or activity level by baking. According to the subject invention, α-amylase is now added to the food product in quantities, that will assure a sufficiently high activity level after processing to maintain or improve the texture of the pet food product. In this manner texture deterioration in the pet food product is avoided even after storage.

While not completely understood, it is theorized that within an amylaceous product the active α-amylase present reacts to hydrolyze the starch, thus reducing the amount of long starch chains available for retrogradation, and resulting in a soft texture throughout the entire product. However the starch does not become susceptible to the action of the enzyme until gelatinization of the starch occurs at temperatures destructive to the α-amylase. As a result, the heat processing of food product generally inactivates the enzyme, allowing a staling process to go forward unless other measures are taken. For instance, the amylase content of a bread dough may affect the texture of the bread initially, however the softness of the bread begins to deteriorate as soon as the baking is completed.

The rate and degree of softening of the pet food is dependent upon the activity of the enzyme used, the presence and amount of free moisture, enzyme, chloride ion, calcium, the pH and temperature of the product. The α-amylase may be derived from bacterial, fungal, animal, cereal or vegetable sources. Bacterial amylase is preferred for the purpose of this invention because it is readily available, can be readily adapted for use in foods, and is more heat stable. α-Amylase generally is active in a pH range of about 2 to 11 with a moisture content of over 10—15%. The preferred pH range for α-amylase activity is in the 4 to 8 range. Most foods contain sufficient amount of chloride, in the form of salt and calcium to activate the enzyme. If calcium is not present in the pet food, any suitable source from edible calcium salts may be added, such as calcium phosphate and calcium sulfate.

Effective processing of an amylaceous pet food product generally depends on temperature and time, and must be sufficient to cook the food and gelatinize the starch, yet insufficient to inactivate the α-amylase. In other words, for an extruded product the temperature and residence time in an extruder must be sufficient to cook the food and gelatinize the starch, yet insufficient to inactivate the α-amylase. Processing temperatures of food containing α-amylase can range up to 150°C. for short periods of time with the effective amounts of the added α-amylase remaining active. However, it is more preferable to operate at process temperatures between 75°C. and 120°C., which is an effective temperatures range for achieving most food processing and stabilization. It is critical that the α-amylase not be totally or substantially inactivated by such conditions as overly high temperatures or long retention times during processing.

Generally speaking, the higher the temperature of the extruder, the lower the residence time the food is permitted to be in the extruder. Preferably, from entry into the extruder to exit from the extruder, the time frame may be from 5 seconds to 15 minutes, dependent chiefly on the extruder used and the output rate.

Comparison tests of pet food with and without α-amylase added show that extruded foods with α-amylase added are at least 5 percent softer and sometimes 10 to 50 percent softer than the extruded foods without α-amylase added, when stored for the same period of time under the same conditions. Thus pet food products without the α-amylase added, that is, containing only natural levels of the enzyme, experienced a staling or hardening effect, while the pet food products with the additional α-amylase were at least as soft as the original texture, and sometimes softer as measured by the standard methods used for determining the softness of the food, i.e., the Kramer Shear Press method or alternatively by the Instron method, both known in the art.

While this concept is applicable to any type of pet food, it is especially applicable to semi-moist pet foods because a soft and moist texture is of considerable importance in semi-moist human or pet foods. While in the past the desired texture has been accomplished by adding considerable amounts of plasticizers or humectants, these ingredients are now not necessary to provide a soft texture. The presence of the added α-amylase with the other ingredients during processing provides the desired soft texture without added humectants or plasticizers. As stated above, the enzyme is believed to hydrolyze the starch thus reducing the long starch chain available for retrogradation. The resultant product is less apt to stale because most of the starch components not already in the crystalline state are hydrolyzed and cannot retrograde. The hydrolysis of the starch does not take place appreciably until the starch is gelatinized. Of course, if pregelatinized starch source are used rather than unprocessed starch sources, enzymatic hydrolysis of the starch will take place in the product dough. Thus, by adding the α-amylase and maintaining its activity through a judicious choice of processing parameters with regard to temperature and time as set forth above, the α-amylase can hydrolyze the gelatinized starch in a controlled manner, even during storage. In this fashion, not only can the product retain its initial soft texture, but also it can even become softer with the passage of time.

Another advantage in adding α-amylase is an improvement in palatability upon storage. It is theorized that the enzymatic hydrolysis increases the sweetness of the product during storage, since dextrins are formed, in addition to its texture softening action. It is also well known that pets prefer a soft, moist, and

3

sweet product. The α-amylase produces just such effects on storage.

A pet food is desired to be formed using α-amylase must contain a sufficient amount of protein from either an animal source, a cereal source, a vegetable source, or mixtures thereof to provide the protein requirements as set forth by the National Research Council. Also, other ingredients to provide a suitable pet food may be included, as known in the art.

As indicated, the protein source for a pet food product is either a vegetable protein source, a cereal protein source, an animal derived protein source, or a combination thereof. The critical point of the protein source is that it must provide the nutritional and legal requirements for the protein in the product. Generally speaking, the protein content in the pet food must be at least about 5 percent to about 50, and more preferably 10 percent to 40 percent on a dry basis. Protein levels are critical depending on the type of pet food being fed. A dog food protein content is advantageously above 22 percent by weight of the pet food on a dry basis while a cat food protein content is advantageously above 28 percent by weight on a dry basis which are recommendations made by National Research Council for dogs and cats respectively to have a completely nutritional food.

The starch content of the food product of the subject invention may vary from 10% to 60% of the total ingredients.

A starch content less than 10% may not provide a significant enough texturizing effect on the pet food product to be noticeable, while more than 60% starch can result in an excessively soft texture. Such starches will usually originate predominantly from cereal grains; however other sources, such as tubers and legumes, may be used.

The subject invention has been found particularly useful in maintaining and enhancing the texture of semi-moist pet foods. A typical semi-moist pet food of about 15 percent to about 40 percent moisture content has about 3 percent to about 65 percent of a protein source, which may comprise meat, vegetable, meat meals or mixtures thereof. A preservative system comprising sugars, edible acids and antimycotic agents may be utilized as described in U.S. Patent No. 3,202,514. Other additives, such as vitamins, minerals, colorants, flavorants, and salts may be added as desired.

While the invention is now clearly disclosed as to how to make and use the invention, the following Examples are presented to guarantee an understanding of the invention without necessarily limiting the invention. All parts and percentages are by weight unless otherwise specified.

### Example I
### Expanded Semi-Moist Pet Food

| Ingredients | (A) (Without) (α-Amylase) | (B) (With) (α-Amylase) |
|---|---|---|
| Meat and Bone Meal | 18.0 pts | 18.0 pts |
| Wheat Flour | 18.0 pts | 18.0 pts |
| Oatmeal | 9.0 pts | 9.0 pts |
| Soy Flour | 9.0 pts | 9.0 pts |
| Propylene Glycol | 5.0 pts | 5.0 pts |
| Ground Yellow Corn | 5.0 pts | 5.0 pts |
| Animal Fat | 4.5 pts | 4.5 pts |
| Oat Flour | 3.0 pts | 3.0 pts |
| Phosphoric Acid | 1.0 pts | 1.0 pts |
| Potassium Sorbate | 0.1 pts | 0.1 pts |
| Vitamins, Minerals, Color | 1.4 pts | 1.4 pts |
| α-Amylase* | — | 30 SKB UNits/ kg. starch |
| Water | 26.0 pts | 26.0 pts |
| | 100.0 pts | 100.0 pts |

* Available from Miles Laboratories as HT—1000

The above products were processed on a Bonnet extruder at 225°F (107.2°C). The resulting products each had bulk densities of 31 lbs/ft³ (0.496 g/cm³) and moisture contents of 30%. Both samples were identical in appearance and texture when first made. However, after 8 months of storage at both 73°F (22.8°C) and 100°F (37.8°C), the product containing the α-amylase enzyme was considerably softer. Both stored products were measured for softness on the Kramer Shear Press with the following results:

| Product | Sample Age | Maximum Peak Height at 73°F (22.8°C) Storage | Maximum Peak Height at 100°F (37.8°C) Storage |
|---|---|---|---|
| A (no enzyme) | 8 months | 89.7 | 94.6 |
| B (with enzyme) | 8 months | 58.2 | 51.5 |

The data from the Kramer Shear Press readings confirmed the observed softer texture of the product containing α-amylase. Also, the higher storage temperature seemed to increase the amount of softening by the enzyme, which was apparent both by observation and by the Kramer Shear Press readings.

Example II
Expanded Semi-Moist Pet Food

A formulation similar to that in Example I was used to test the texture softening action of Miles Taka-Therm® α-amylase, an amylase having a different activity level than Miles HT-1000. As in Example I, the only difference was that one contained 100 SKB units/kg-starch Miles Taka-Therm® α-amylase (D) and the other (C) did not.

Both products were processed at 230°F (95°C) in an extruder, and had finished product moisture contents of 30%, being expanded to a density of 32 lbs/ft³ (0.512 g/cm³). No differences in product texture were observed initially, but after 3½ months of ambient storage, the product containing the α-amylase was considerably softer. The following measurements were made on the stored products using a shear cell on an Instron Universal Testing Machine, Model II:

| Shear Cell Conditions | Sample |
|---|---|
| Sample Size: 40 gm | C, no enzyme |
| Stroke Length: 6 gm | D, α-amylase |
| Stroke Speed: 10 cm./min. | |
| Full Scale: 50 Kg. full scale | |

Product Measurements

| Age | Average Peak Height |
|---|---|
| C, 3½ months | 410.5 cm |
| D, 3½ months | 263.5 cm |

As can be seen, the Instron measurements confirmed the improved softness observed in the stored sample containing α-amylase enzyme.

Example III
Non-Expanded Semi-Moist Pet Food

| Ingredients | E Without (α-Amylase) | F With (α-Amylase) |
|---|---|---|
| Meat By-Products | 25.0 pts | 25.0 pts |
| Wheat Flour | 25.0 pts | 25.0 pts |
| Soybean Flour | 19.0 pts | 19.0 pts |
| Corn Syrup | 6.0 pts | 6.0 pts |
| Propylene Glycol | 5.0 pts | 5.0 pts |
| Corn Flour | 4.0 pts | 4.0 pts |
| Phosphoric Acid | 1.0 pts | 1.0 pts |
| Potassium Sorbate | 0.1 pts | 0.1 pts |
| Vitamins, Minerals, Color, etc. | 5.9 pts | 5.9 pts |
| α-Amylase* | — | 600 SKB Units/ kg. Starch |
| Water | 9.0 pts | 9.0 pts |
| | 100.0 pts | 100.0 pts |

* Available from Miles Laboratories as HT—1000

The above products were processed on a Bonnot extruder at 190°F (87.8°C). The products were made in a strand form at a finished product moisture content of 30%, and were tested for palatability initially and after 9 months of ambient storage. After nine months the observed softness of the product F (with α-amylase) was greater than product E (without α-amylase). A standard 2 bowl preference method was used to obtain the following results on palatability:

Initial 2-Pan Test

| Product | % Consumption | Level of Statistical Significance |
|---|---|---|
| E, (without α-amylase) | 46 | (Not significant) |
| F, (with α-amylase) | 54 | |

Nine-Month Storage 2-Pan Test

| Product | % Consumption | Level of Statistical Significance |
|---|---|---|
| E, (without α-amylase) | 36 | 99% (Highly significant) |
| F, (with α-amylase) | 64 | |

According to the above data there was no initial significant difference in the palatability of the products with or without α-amylase. However, after nine months of storage, not only was the product with enzyme noticeably softer, but it was significantly more palatable than the same product without the enzyme.

Example IV

The procedure of Example III is applied to the following formulation:

| Ingredients | Formula |
| --- | --- |
| Granola Mix (Oat flakes, Wheat flakes, Nut, Honey, etc.) | .045 kg |
| Sucrose | .010 kg |
| Glycerol | .010 kg |
| Shortening | .005 kg |
| Vitamins, Minerals, Flavor Phosphoric Acid, and Potassium Sorbate | .002 kg |
| α-Amylase | 20. SKB UNits/kg. Starch |
| Water | .028 kg |
| | 100. |

The product of Example 4 results in a granola snack bar which maintains a soft product texture over an extended shelflife without becoming hard or crumbly in texture. The α-amylase maintains the desired texture, but does not hydrolyze to the point where the product becomes too soft.

The above examples show that α-amylase is useful as a texturing agent, not only preventing the degradation of a soft texture of a food product but even contributing to the improvement of the texture of the food product on storage.

**Claims**

1. A soft, semi-moist pet food product including soft, extrusion cooked particles having 10—60% starch, 22—50% protein and 15—40% moisture, characterized in that said product includes an enzyme in the pet food product consisting essentially of alpha-amylase, wherein the alpha-amylase is in an active condition and wherein the active condition alpha-amylase is in the pet food in sufficient quantity to maintain the soft texture of the pet food product during subsequent storage.

2. The pet food product according to claim 1, wherein the pet food product has a pH in the range of 2—11 and preferably in the range 4—8.

3. The pet food product according to claim 1 or 2, wherein the alpha-amylase is present in the pet food product in an amount from a trace to 5,000 SKB units of alpha-amylase for each kilogram of starch.

4. A method of making a product according to claim 1 including the steps of admixing a dough having at least one amylaceous ingredient, at least one proteinaceous ingredient selected from animal, vegetable or cereal sources, and sufficient water to provide a moisture content in the pet food product in the range 15—40%, and extrusion cooking the dough at a temperature in the range of 75—120°C. inclusive for a time period in the range 5 seconds to 15 minutes, characterized in that said method comprises adding to the dough en enzyme ingredient consisting essentially of a heat-stable alpha-amylase enzyme, and the extrusion cooking of the dough containing alpha-amylase is at a temperature and for a time period sufficiently mild that at least some alpha-amylase remains active in the pet food product, and storing the pet food product containing the active alpha-amylase.

5. The process according to claim 4, wherein from a trace to 5000 SKB units of alpha-amylase for each kilogram of amylaceous ingredient is added to the dough.

**Patentansprüche**

1. Weiches, halbfeuchtes Futterprodukt für Haustiere mit welchen, strangpreßgegarten Teilchen, die 10—60% Stärke, 22—60% Eiweiß und 15—40% Feuchtigkeit enthalten, dadurch gekennzeichnet, daß das Futterprodukt für Haustiere ein Enzyme enthält, das im wesentlichen aus alpha-Amylase besteht, die sich im aktiven Zustand befindet und in dem Futter für Haustiere in einer solchen Menge enthalten ist, daß das Futterprodukt für Haustiere bei der darauffolgenden Lagerung seine welche Textur beibehält.

2. Futterprodukt für Haustiere nach Anspruch 1, dadurch gekennzeichnet, daß das Futterprodukt für Haustiere einen pH-Wert im Bereich von 2 bis 11, vorzugsweise im Bereich von 4 bis 8, hat.

3. Futterprodukt für Haustiere nach Anspruch 1 oder 2, dadurch gekennzeichnet, daß die alpha-Amylase in dem Futterprodukt für Haustiere in einer Menge zwischen einer Spur bis 5000 SKB-Einheiten alpha-Amylase pro kg Stärke enthalten ist.

4. Verfahren zum Herstellen eines Produkte nach Anspruch 1 mit folgenden Schritten: durch Mischen wird ein Teig hergestellt, der mindestens einen stärkehaltigen Bestandteil, mindestens einen eiweißhaltigen Bestandteil, der aus tierischem, pflanzlichem oder Getreidegut ausgewählt ist, und soviel Wasser enthält, daß das Futterprodukt für Haustiere Feuchte im Bereich von 15 bis 40% enthält; und der Teig wird bei 5 Sekunden bis 15 Minuten bei einer Temperatur von 75 bis 120°C strangpreßgegart, dadurch gekennzeichnet, daß in dem Verfahren dem Teig ein Enzymbestanteil zugesetzt wird, der im wesentlichen aus einem wärmebeständigen alpha-Amylaseenzym besteht, daß der der die alpha-Amylase enthaltende Teig bei einer so milden Temperatur und während einer so kurzen Zeit strangpreßgegart wird, daß mindestens etwas alpha-Amylase in dem Futterprodukt für Haustiere aktiv bleibt, und daß das die alpha-Amylase enthaltende Futterprodukt für Haustiere gelagert wird.

5. Verfahren nach Anspruch 4, dadurch gekennzeichnet, daß dem Teig alpha-Amylase in einer Menge zwischen einer Spur und 5000 SKB-Einheiten pro kg des stärkehaltigen Bestandteils zugesetzt wird.

## Revendications

1. Un produit alimentaire mou, semi-humide, pour animaux familiers, comprenant des particules molles, cuites avec extrusion, qui contiennent 10 à 60% d'amidon, 22 à 50% de protéines et 15 à 40% d'humidité, caractérisé en ce qu'il contient une enzyme consistant essentiellement en α-amylase à l'état actif, l'α-amylase active restant présente en quantité suffisante dans le produit alimentaire pour animaux familiers pour que celui-ci conserve sa texture molle au cours de la conservation subséquente.

2. Le produit alimentaire pour animaux familiers selon la revendication 1, présentant un pH de 2 à 11 et de préférence de 4 à 8.

3. Le produit alimentaire pour animaux familiers selon la revendication 1 ou 2, dans lequel l'α-amylase est présente en quantités allant de traces jusqu'à 5 000 unités SKB/kg d'amidon.

4. Un procédé pour préparer un produit selon la revendication 1, comprenant les stades opératoires de mélange d'une pâte contenant au moins un composant amylacé, au moins un composant protéique choisi parmi des sources animales ou végétables, y compris des sources céréalières, et de l'eau en proportion suffisante pour que le produit alimentaire pour animaux familiers contienne de 15 à 40% d'humidité, et de cuisson par extrusion de la pâte à une température dans l'intervalle de 75 à 180°C inclus pendant une durée allant de 5 s à 15 min, caractérisé en ce qu'on ajoute à la pâte une enzyme consistant essentiellement en un α-amylase stable à la chaleur et en ce que la cuisson de la pâte contenant l'α-amylase avec extrusion est réalisés à une température et pendant une durée suffisamment modérées pour qu'une partie au moins de l'α-amylase reste à l'état actif dans le produit alimentaire pour animaux familiers, après quoi on conserve le produit alimentaire pour animaux familiers contenant l'α-amylase active.

5. Le procédé selon la revendication 4, dans lequel on ajoute à la pâte de l'α-amylase en quantités allant de traces jusqu'à 5 000 unités SKB/kg de composant amylacé.